# EUROPEAN PATENT APPLICATION

(11) **EP 4 708 730 A1**
(43) Date of publication of application: **11.03.2026**
(21) Application number: 24198447.5
(22) Date of filing: 04.09.2024
(51) Int. Cl.: H04B 10/70, H01S 5/062, H04L 9/08

(54) **IMPROVED QKD EMITTER AND QKD SYSTEM COMPRISING THE SAME**

(71) Applicant: ID Quantique S.A., 1227 Genève (CH)
(72) Inventor: HUTTNER, Bruno, 1022 Chavannes-près-Renens (CH)
(74) Representative: KATZAROV S.A.

(57) **Abstract**

The present invention relates to a Quantum Key distribution emitter (1) comprising a light source (2) adapted to emit light, and a light source driver (3) adapted to control said light source (2) through an electric current, characterized in that said light source driver (3) is adapted to vary the electric current to control the light source (2) to emit a pair of pulses such that the intensity between the two pulses in the pair is lowered to a minimum level above zero so as to keep a controlled phase between the two pulses.

## Description

### Technical Field

The present invention relates to Quantum Key Distribution technology and more particularly to an emitter presenting a simplified structure and a QKD system comprising said emitter.

### Background of the invention

Quantum cryptography or quantum key distribution, in the following also referred to as QKD, is a method allowing the distribution of a secret key between two distant parties, the emitter and the receiver, with a provable security. QKD relies on quantum physics principles and encoding information in quantum states, or qubits, as opposed to classical communication's use of bits. Usually, photons are used for these quantum states. QKD exploits certain properties of these quantum states to ensure its security.

More particularly, the security of this method comes from the fact that the measurement of a quantum state of an unknown quantum system modifies the system itself. In other words, a spy eavesdropping on a quantum communication channel cannot get information on the key without introducing errors in the key exchanged between the emitter and the receiver thereby informing the user of an eavesdropping attempt.

The encryption devices enable secure transmission of useful payload by performing some kind of symmetric encryption using the keys exchanged by QKD. Specific QKD systems are described for instance in US 5,307,410, and in the article by Gisin et al. entitled "Quantum cryptography" Rev. Mod. Phys. 74, 145 - Published 8 March 2002.

QKD implementations rely on different parameters to encode the qubits. Polarization encoding is used mostly for free-space applications. In optical fibers, where polarization is not stable, it relies most often on the relative phase between two pulses, or on a combination of phase and time-bins. In phase and time-bin QKD emitters, there is a need to generate pairs of optical pulses with fixed or adjustable phase between them. This is normally done either with amplitude and phase modulators, which can be external or integrated in the laser, or with a fiber interferometer. However, both solutions require additional modules which complexifies the emitter structure and manufacture. Moreover, these modules are expensive and costly.

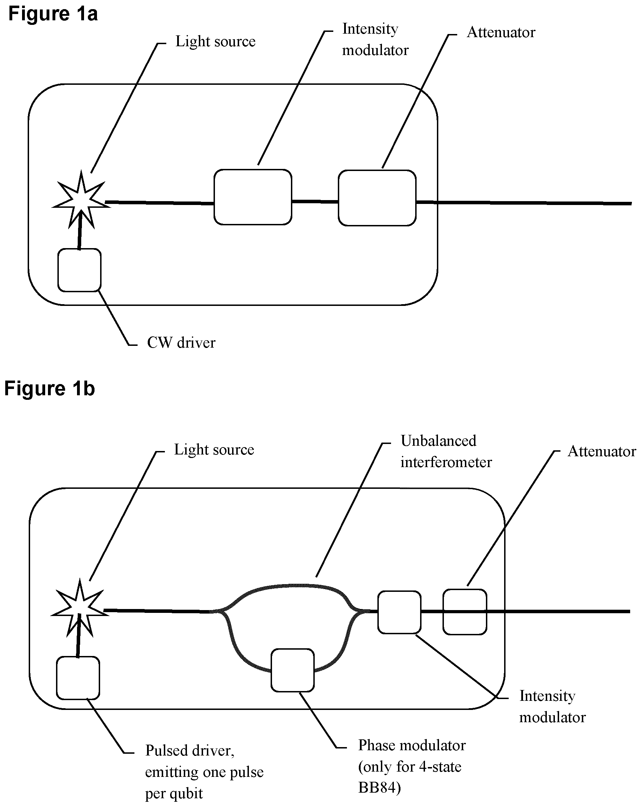

Figure 1a shows a conventional system, known as DPS-QKD or the COW protocol, where the emitter includes a continuous wave (CW) laser, an amplitude modulator which generates pairs of pulses with fixed phase relationship and an attenuator to reach single-photon intensities. In addition to the complex structure of the modulator, one drawback here is that the phase between the pulses, even outside the pairs used as qubits, is fixed. This fixed phase relationship prevents the applications of standard security proofs. Therefore, these protocols are proved to be secure against so-called collective attacks, but not against the most general coherent attacks.

In other conventional systems, like the one shown in Figure 1b, one uses the standard four-state BB84 protocol, with phase and time-bins. In this protocol, for each qubit, the emitter randomly selects one out of four possible states, grouped into two different bases. In the data basis, customarily known as the Z-basis, the two states correspond to different time-bins, with one advanced pulse representing a 1, and one delayed pulse representing a 0. These states are used to generate the secret key. In the monitoring basis, customarily known as the X-basis, the two states correspond to two pairs of pulses, such that the relative phases between the two pulses are either 0 or pi. When these states are overlapped at an interferometer at the receiver side, they can be separated, with one pair generating a count on one output arm, and the second pair generating a count in the second output arm. These states are used to monitor a possible attack from an eavesdropper. This protocol requires one pulsed source to generate the optical pulses, an interferometer to generate the pairs of pulses with a given phase relationship, a phase modulator to generate the different phases needed in the X-basis, an amplitude modulator to remove one of the two pulses for generating the Z-basis time-bins, and an attenuator to reach single-photon intensities. The structure and manufacture process of this system is therefore more complicated than the systems using DPS-QKD or the COW protocol.

In order to make a simple, low-cost QKD system with complete security proofs, a 3-state BB84 protocol is to be preferred. In this protocol, one uses two time-bin pulses for the Z-basis (data) and only one pair of pulses for the X-basis (monitor). In this case, the phase modulator is not needed in the interferometer, since only one state is generated in the X-basis. Lasers with internal electro-absorption modulators such as the one described in US20020131466A, or integrated components with a laser and an external modulator can also be used to generate these pulses, but again with additional complexification and cost.

From the above we understand that with current techniques, the QKD emitter contains high-speed optical elements which are complex, costly and do not allow large scale exploitations of QKD. Therefore, there is a need to reduce the complexity and the cost of the QKD emitter.

In order to extend QKD applications to end-users, a simple structured and inexpensive QKD emitter is needed.

In this regard, a primary object of the invention is to solve the above-mentioned problems and more particularly to provide a system using a simple structured QKD emitter easy to manufacture and to implement.

Another object of the invention it to provide a low-cost solution for the QKD emitter.

### Summary of the invention

The present invention solves the above-mentioned problems by reducing the number of optical elements and replacing them by a single light source and its driver so as to provide a low-cost emitter preferably for the three-state BB84 protocol. More particularly, the invention provides a way to implement the three-state BB84 protocol with a particular light source, which is capable of emitting the single time-bin pulses (advanced or delayed in the so-called Z-basis), or pairs of pulses with a controlled phase relationship between them (in the so-called X-basis) without the need of a modulator or an interferometer.

The light source can be a single Distributed Feedback (DFB) laser and its driver. No other high-speed optical component is needed. The complete transmitter only requires the laser, the laser driver, and preferably a low-speed controllable optical attenuator, to lower the intensity to single-photon levels to carry out the three-state BB84 protocol.

The general idea of the invention is based on the use of a light source such as a Distributed Feedback (DFB) laser, where the current in the laser driver is not completely switched off between the two optical pulses comprising the pair of pulses in the X-basis, such that the remaining current in the laser allows to control the phase between the two optical pulses, while the optical output is lowered to an acceptable minimal level.

A first aspect of the invention is a QKD emitter comprising a light source adapted to emit light, and a light source driver adapted to control said light source through an electric current, characterized in that said light source driver is adapted to vary the electric current to control the light source to emit a pair of pulses such that the intensity between the two pulses in the pair is lowered to a minimum level above zero so as to keep a controlled phase between the two pulses.

Preferably, the light source is a Distributed Feedback (DFB) laser.

Advantageously, it does not comprise any of an interferometer and/or a modulator.

In a preferred manner, it further comprises an attenuator.

According to a preferred embodiment of the present invention, it executes a three-state BB84 protocol.

Preferably, the light source driver is adapted to continuously feed electric current to the light source such that the light source is adapted to continuously emit light between two pulses of a pairs of pulses.

Advantageously, the intensity between the two pulses in the pair is lowered to a minimum level above zero so as to keep a fixed phase between the two pulses.

According to a preferred embodiment of the present invention, the light source driver is adapted to control the intensity going out of the light source so as to generate a 0 or a 1 (single pulses) in the Z basis or said pulse for the X-basis.

A second aspect of the invention is a QKD system comprising a QKD emitter of the first aspect and a receiver connected through a quantum channel.

A third aspect of the invention is a QKD method complemented in the QKD system of the second aspect comprising a step of emitting two pulses between which the intensity of the light source is lowered to a minimum level above zero so as to keep a constant phase between the pulses.

The other advantages of the device of the invention being similar to the ones above, they will not be repeated here.

### Brief description of the drawings

Further particular advantages and features of the invention will become more apparent from the following non-limitative description of at least one embodiment of the invention which will refer to the accompanying drawings, wherein the same reference numerals indicate the same feature. In particular,
- Figure 1a and 1b show the Optical Setups for the DPS-QKD or COW protocol and for the 3-states BB84 protocols according the Prior Art;
- Figure 2 shows a QKD emitter according the present invention; and
- Figure 3 shows the sequence of pulses emitted in the Z-basis and in the X-basis by the QKD emitter according the present invention.

### Detailed Description

The invention will be described, for better understanding, with reference to specific embodiments. It will however be understood that the invention is not limited to the embodiments herein described but is rather defined by the claims and encompasses all embodiments which are within the scope of the claims.

Figure 1a shows the current implementation of DPS-QKD or COW protocol where one uses a continuous wave (CW) electric current driver, a light source generating a CW light beam, an intensity modulator, which carves out the optical pulses from the CW light, and an attenuator.

In the prior art implementation of three-state BB84 with phase and time-bins, one uses emitter as shown in figure 1b comprising a pulsed electric current driver generating single current pulses, a light source generating the optical pulses, an unbalanced interferometer where the pairs of pulses are created, and an intensity modulator, which can either attenuate one out of the two pulse to generate the time bins (0 and 1) in the Z-basis, or leave the two pulses through to generate the monitoring pulse in the X-basis. In the four-state BB84 protocol, there is an additional phase modulator in one arm of the interferometer, which generates the two different phases in the X-basis.

With this arrangement, the current in the driver is completely switched off between electric current pulses such that the laser is also switched off.

When a new current pulse arrives, the laser starts from spontaneous emission, which generates a completely random phase for each single optical pulse in the Z basis as well as for the first pulse in the two pulses in the X-basis. This random phase is a requirement for the three-state BB84 protocol and is necessary for the complete security proof of the protocol. However, the relative phase between the two pulses in the X-basis is controlled by the relative lengths of the two arms of the interferometer.

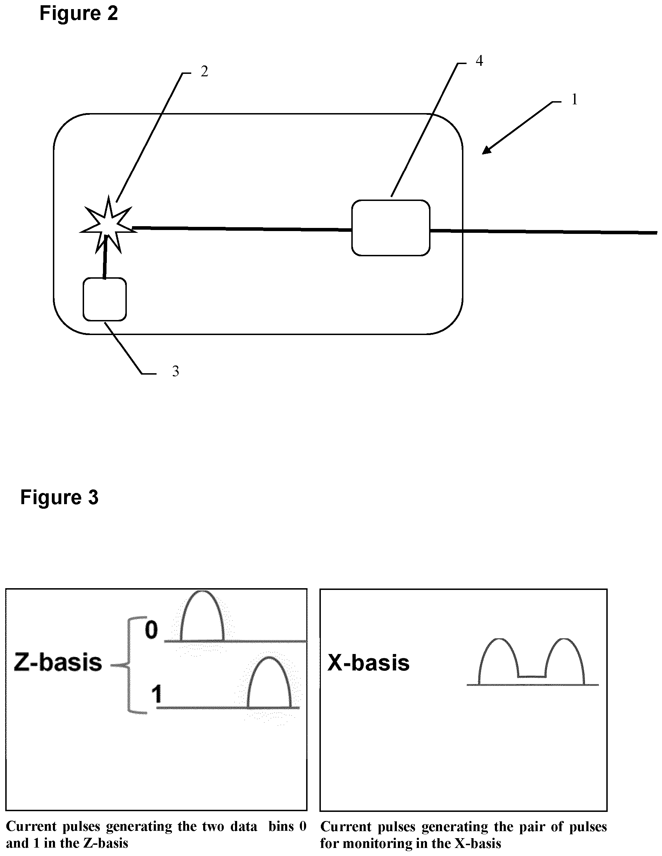

Figure 2 represents the emitter 1 according to a preferred embodiment of the invention which is a QKD emitter 1 comprising a light source 2 adapted to emit light and a light source driver 3 adapted to control said light source 2 through an electric current so as to generate the variety of optical pulses needed for the protocol. In particular, the light source driver 3 allows the light source 2 to emit both the single time-bin pulses (0 and 1) and the two optical pulses with a controlled phase relationship between two pulses. This is a further difference, since in prior art, the different optical pulses are generated optically by the combination of interferometer and intensity modulator, while here the current driver 3 generates the different types of pulses directly.

The light source driver 3 is adapted to control the light source 2 in other words, it controls the optical intensity going out of the laser. So, by choosing the right electric current, it generates a 0 or a 1 (single optical pulses) or a double optical pulse for the X-basis such that its intensity between the two pulses is lowered to a minimum level above zero so as to keep a controlled phase between the pulses

More particularly, the light source driver 3 is adapted to emit a fixed current to control the light source 2 to emit double current pulses, with a remaining low current between, to generate the pair of pulses with controlled phase for the X-basis (monitor), as shown in Figure 3.

The low current has to be chosen to keep the laser just above threshold, and therefore keep a controlled phase relationship between the pulses.

In the X-basis, the two pulses therefore have a controlled phase relationship, as required in the three-state BB84 protocol. The choice of the right ratio between this low current and the current generating the pulses is preferably adapted to ensure that, on the one hand, the phase relationship is kept, and on the other hand the optical power between the pulses is low enough to avoid significant noise.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

## Claims

1. Quantum Key distribution emitter (1) comprising
a light source (2) adapted to emit light, and
a light source driver (3) adapted to control said light source (2) through an electric current,
**characterized in that**
said light source driver (3) is adapted to vary the electric current to control the light source (2) to emit a pair of pulses such that the intensity between the two pulses in the pair is lowered to a minimum level above zero so as to keep a controlled phase between the two optical pulses.

2. Quantum Key distribution emitter according to claim 1, **characterized in that** the light source (2) is a Distributed Feedback (DFB) laser.

3. Quantum Key distribution emitter according to claim 1 or 2, **characterized in that** it does not comprises any of an interferometer and/or a modulator.

4. Quantum Key distribution emitter according to any one of claims 1 to 3, **characterized in that** it further comprises an attenuator (3).

5. Quantum Key distribution emitter according to any one of claims 1 to 4, **characterized in that** it executes a three-state BB84 protocol.

6. Quantum Key distribution emitter according to any one of claims 1 to 5, **characterized in that** the light source driver (3) is adapted to continuously feed electric current to the light source (2) such that the light source (2) is adapted to continuously emit light between two pulses of a pairs of pulses.

7. Quantum Key distribution emitter according to any one of claims 1 to 6, **characterized in that** the intensity between the two pulses in the pair is lowered to a minimum level above zero so as to keep a fixed phase between the two pulses.

8. Quantum Key distribution emitter according to any one of claims 1 to 7, **characterized in that** the light source driver (3) is adapted to control the intensity going out of the light source (2) so as to generate a 0 or a 1 (single pulses) in the Z basis or said pair of pulses for the X-basis.

9. Quantum Key distribution system comprising a Quantum Key distribution emitter (1) of any one of claims 1-8 and a receiver connected through a quantum channel.

10. Quantum Key distribution method complemented in the Quantum Key distribution system of claim 9 comprising a step of emitting two pulses between which the intensity of the light source (2) is lowered to a minimum level above zero so as to keep a constant phase between the pulses.
